# EUROPEAN PATENT SPECIFICATION

(11) **EP 2 878 779 B1**
(45) Date of publication and mention of the grant of the patent: **30.08.2017**
(21) Application number: 13806650.1
(22) Date of filing: 12.06.2013
(51) Int. Cl.: F01N 3/08, B01D 53/94

(54) **UREA SOLUTION INJECTION DEVICE**
VORRICHTUNG ZUR INJEKTION VON HARNSTOFFLÖSUNGEN
DISPOSITIF D'INJECTION D'UNE SOLUTION D'URÉE

(30) Priority: 21.06.2012 JP 2012140014
(43) Date of publication of application: 03.06.2015
(73) Proprietor: Yanmar Co., Ltd., Osaka-shi, Osaka 530-8311 (JP); Japan Ship Machinery & Equipment Association, Minato-ku, Tokyo 105-0001 (JP)
(72) Inventor: INOUE Tsuyoshi, Osaka-shi Osaka 530-8311 (JP)
(74) Representative: Jostarndt Patentanwalts-AG
(86) International application number: PCT/JP2013/066272
(87) International publication number: WO 2013/191067

(56) References cited:
- JP-A- H02 204 614
- JP-A- 2000 110 631
- JP-A- 2001 020 724
- JP-A- 2004 508 488
- JP-A- 2009 264 221
- JP-U- H04 116 617
- JP-U- H04 116 617
- US-A1- 2009 266 059
- US-B1- 6 361 754

## Description

### Technical Field

The present invention relates to an exhaust purification apparatus. Especially, the present invention relates to a urea solution injection device for a ship.

### Background Art

Conventionally, an exhaust purification apparatus is known in which a selective reducing type NOx catalyst (SCR catalyst) is arranged inside an exhaust pipe and NOx (nitrogen oxide) is reduced into nitrogen and water with ammonia as a reducing agent for decreasing the NOx in exhaust gas discharged from an internal combustion engine.

A urea solution is supplied from a urea solution injection nozzle arranged inside an exhaust pipe to exhaust gas, and ammonia is generated from the urea solution by heat of the exhaust gas so as to reduce NOx into nitrogen and water.

In the exhaust purification apparatus, when an addition amount of the urea solution against a NOx discharge amount is insufficient, NOx cannot be decreased to a target purification rate (denitration shortage). When the addition amount of the urea solution against the NOx discharge amount is excessive, NOx in the exhaust gas is decreased more than the target purification rate (over-denitration) and ammonia slip that ammonia exceeding a theoretical equivalent is discharged to the atmosphere occurs. Then, there is a configuration that a NOx sensor is provided in an exhaust pipe and control is performed so as to add the urea solution of a suitable amount against the NOx discharge amount. For example, it is like the Patent Literature 1.

However, in the NOx sensor of the exhaust purification apparatus described in the Patent Literature 1, accurate measurement of the NOx discharge amount may not be performed because of interference of ammonia. It is disadvantageous that the NOx sensor in the internal combustion engine which is operated for 24 hours such as an engine for a ship requires frequent maintenance work because of a short life of the NOx sensor.
Patent Literature 2 discloses an exhaust system for use with a combustion. The exhaust system may have an exhaust passageway, a reduction catalyst, a reductant injector, and a controller. The controller may have a NOX/reductant relationship map, and be configured to receive a first input relating to an amount of NOx within the exhaust passageway upstream of the reduction catalyst, and reference the NOX/reductant relationship map to determine an initial amount of reductant that should be directed into the exhaust passageway based on the first input. The controller may also be configured to receive a second input relating to performance of the reduction catalyst, determine an adjustment to the initial amount of reductant based on the second input, and regulate operation of the reductant injector to direct an adjusted amount of reductant into the exhaust passageway. The controller may further be configured to update the NOX/reductant relationship map based on the determined adjustment.
Patent Literature 3 discloses a safe, reliable SCR system for reducing NOx emissions from an internal combustion engine hydrolyzes urea or like reagent under sufficient pressure to assure generation of ammonia, without production of solids that could foul injectors or catalysts. The heat for hydrolysis can be provided by the exhaust or an auxiliary means.

### Prior Art Reference

### Patent Literature

- Patent Literature 1:: the Japanese Patent Laid Open Gazette 2008-157136
- Patent Literature 2:: US 2009 / 266059 (A1)
- Patent Literature 3:: US 6 361 754 (B1)

### Disclosure of Invention

### Problems to Be Solved by the Invention

The present invention is provided in consideration of the problems as mentioned above, and the purpose of the invention is to provide an exhaust purification apparatus which can add a urea solution of a suitable amount without measuring directly a NOx discharge amount with a NOx measurement means.

### Means for Solving the Problems

The problems to be solved by the present invention have been described above, and subsequently, the means of solving the problems will be described below.

According to the present invention, an urea solution injection device of an exhaust purification device in which an urea solution is added as a reducing agent to exhaust gas of an internal combustion engine so as to reduce nitrogen oxide in the exhaust gas, includes a temperature sensor detecting a temperature of atmosphere, a humidity sensor detecting an absolute humidity or a relative humidity of the atmosphere, and a control device calculating an addition amount of the urea solution. A map, which converts an actual NOx discharge amount of the internal combustion engine driven with each rotation speed and each load under predetermined temperature and absolute humidity of the atmosphere into the standard NOx discharge amount of the internal combustion engine with each rotation speed and each load under standard conditions with a correction formula is stored in the control device. A rotation speed detection means detecting the rotation speed of the internal combustion engine and a load detection means detecting the load of the internal combustion engine are connected to the control device. The standard NOx discharge amount corresponding to the rotation speed detected by the rotation speed detection means and the load detected by the load detection means is calculated with the map, the standard NOx discharge amount is
NOx discharge amount is converted into the actual NOx discharge amount of the rotation speed and the load under the temperature of the atmosphere detected by the temperature sensor and the absolute humidity of the atmosphere detected by the humidity sensor with the correction formula by inverse operation, and the addition amount of the urea solution is calculated based on the actual NOx discharge amount.

According to the present invention, the addition amount is calculated in consideration of a target purification rate and a concentration of the urea solution.

### Effect of the Invention

The present invention brings the following effects.

According to the present invention, the NOx discharge amount based on the characteristic of the internal combustion engine can be calculated while considering the temperature of the atmosphere and the absolute humidity of the atmosphere which influence the NOx discharge amount greatly. Accordingly, the urea solution of the suitable amount can be added without measuring directly the NOx discharge amount with a NOx sensor.

According to the present invention, the addition amount of the urea solution can be adjusted corresponding to the operating condition. Accordingly, the urea solution or ammonia of the suitable amount can be added without measuring directly the NOx discharge amount with a NOx sensor.

### Brief Description of Drawings

[Fig. 1] Fig. 1 is a drawing of an exhaust purification apparatus according to an embodiment of the present invention.
[Fig. 2] Fig. 2 is a drawing partially in section of a urea solution injection nozzle of the exhaust purification apparatus according to the embodiment of the present invention.
[Fig. 3] Fig. 3 is a flow chart of control processes of an addition amount of a urea solution according to the first embodiment of the present invention.
[Fig. 4] Fig. 4 is a graph of a relation between an actual NOx discharge amount and the addition amount of the urea solution.

### Detailed Description of the Invention

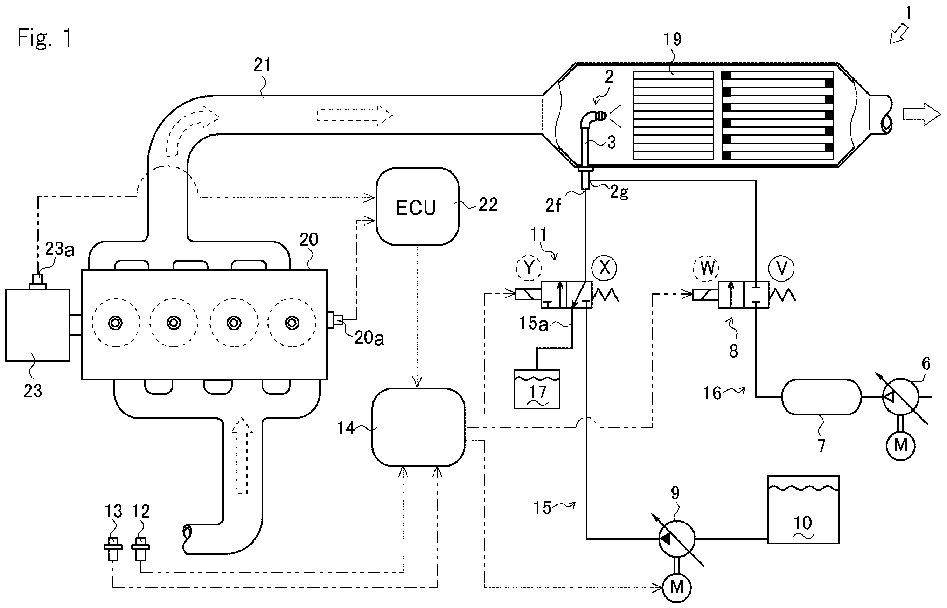

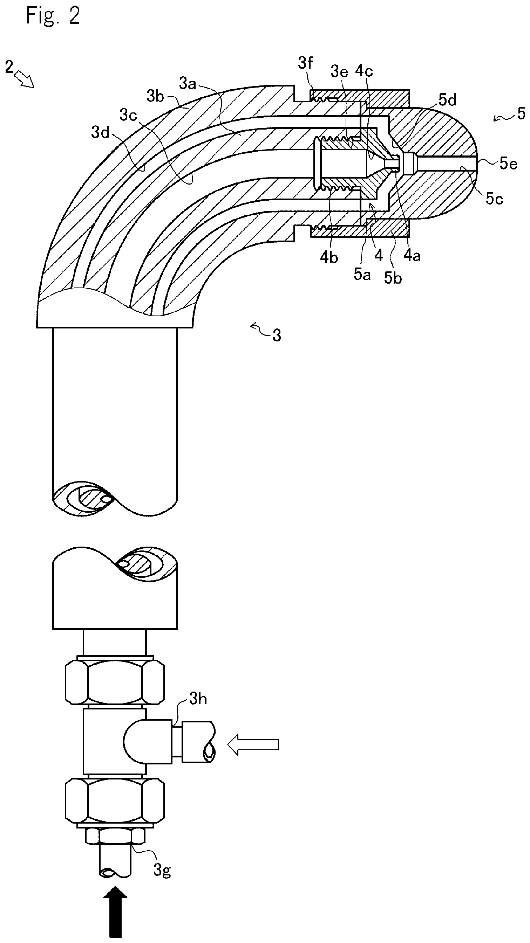

An explanation will be given on an exhaust purification apparatus 1 according to an embodiment of the present invention referring to Figs. 1 and 2. In this embodiment, an "upstream side" means an upstream side in a flow direction of fluid, and a "downstream side" means a downstream side in the flow direction of the fluid. The exhaust apparatus is not limited to this embodiment and may alternatively be an air-less type apparatus which does not use pressurized air.

As shown in Fig. 1, the exhaust purification apparatus 1 purifies exhaust gas discharged from an engine 20. The exhaust purification apparatus 1 is provided in an exhaust pipe 21 of the engine 20. The exhaust purification apparatus 1 has a urea solution injection nozzle 2, a pressurized air supply pump (compressor) 6, a pressurized air valve 8, a urea solution supply pump 9, a switching valve 11, a control device 14, a temperature sensor 12, a humidity sensor 13, a first supply flow path 15, a second supply flow path 16, a NOx catalyst 19 and the like.

The urea solution injection nozzle 2 supplies a urea solution to an inside of the exhaust pipe 21. The urea solution injection nozzle 2 includes a tubular member, and one of sides (lower side) thereof is inserted into the inside of the exhaust pipe 21 from the outside. The urea solution injection nozzle 2 has a double pipe 3, a liquid nozzle 4, an air nozzle 5 and the like (see Fig. 2).

The pressurized air supply pump (compressor) 6 supplies pressurized air. The pressurized air supply pump 6 pressurizes (compresses) air and supplies the air. The pressurized air supply pump 6 supplies the air to an air tank 7 when a pressure of the air tank 7 becomes lower than a predetermined pressure, and stops when the pressure of the air tank 7 reaches the predetermined pressure. In this embodiment, the pressurized air supply pump 6 is not limited and may be a member which can maintain the pressure of the air tank 7.

The pressurized air valve 8 opens and closes a flow path of the pressurized air. The pressurized air valve 8 is provided in the second supply flow path 16. The pressurized air valve 8 includes an electromagnetic valve and a solenoid thereof is connected to the control device 14. The pressurized air valve 8 can be switched to a position V and a position W by sliding a spool. When the pressurized air valve 8 is at the position V, the second supply flow path 16 is closed. Then, the pressurized air is not supplied to the urea solution injection nozzle 2. When the pressurized air valve 8 is at the position W, the second supply flow path 16 is opened. Then, the pressurized air is supplied to the urea solution injection nozzle 2. The pressurized air valve 8 is not limited thereto and may alternatively be held at the position V or the position W by a driving motor or the like.

The urea solution supply pump 9 supplies a urea solution. The urea solution supply pump 9 is provided in the first supply flow path 15. The urea solution supply pump 9 supplies the urea solution in a urea solution tank 10 via the first supply flow path 15 to the urea solution injection nozzle 2 at a predetermined flow rate. In this embodiment, the urea solution supply pump 9 is not limited and may be a member which can supply the urea solution at the predetermined flow rate.

The switching valve 11 switches a flow path of the urea solution. The switching valve 11 is provided at the downstream side of the urea solution supply pump 9 in the first supply flow path 15. A drain pot 17 is connected via a flow path 15a to the switching valve 11. The switching valve 11 includes an electromagnetic valve and a solenoid thereof is connected to the control device 14. The switching valve 11 can be switched to a position X and a position Y by sliding a spool.

When the switching valve 11 is at the position X, the first supply flow path 15 is closed and the urea solution injection nozzle 2 is communicated with the drain pot 17. Then, the urea solution is not supplied to the urea solution injection nozzle 2, and the urea solution in the first supply flow path 15 and the urea solution injection nozzle 2 at the downstream side of the switching valve 11 is discharged to the drain pot 17.

When the switching valve 11 is at the position Y, the first supply flow path 15 is opened. Then, the urea solution is supplied to the urea solution injection nozzle 2.

The temperature sensor 12 detects a temperature T of the atmosphere. The temperature sensor 12 is arranged at a position such as an engine room of a ship at which the temperature T of the atmosphere sucked by the engine 20 can be detected. This embodiment is not limited thereto, and any means is available if it can detect the temperature T of the atmosphere and transmit a detection signal of the temperature to the control device 14.

The humidity sensor 13 detects an absolute humidity H of the atmosphere. The humidity sensor 13 is arranged at a position such as the engine room of the ship at which the absolute humidity H of the atmosphere sucked by the engine 20 can be detected. This embodiment is not limited thereto, and any means is available if it can detect the absolute humidity H and transmit a detection signal of the absolute humidity to the control device 14. For example, it may alternatively be configured that a relative humidity is detected and a detection signal thereof is transmitted to the control device 14 so as to calculate the absolute humidity H based on the temperature T of the atmosphere.

The control device 14 controls the urea solution supply pump 9, the switching valve 11, the pressurized air valve 8 and the like. Various programs and data for controlling the urea solution supply pump 9, the switching valve 11, the pressurized air valve 8 and the like are stored in the control device 14. The control device 14 may be configured by connecting a CPU, a ROM, a RAM, a HDD and the like by a bus, or may alternatively be configured by a one-chip LSI or the like. The control device 14 may be configured integrally with an ECU 22 which controls the engine 20.

A map M is stored in the control device 14. The map M converts an actual NOx discharge amount, which is an amount of NOx included in exhaust gas of the engine 20 driven with each rotation speed and each load under predetermined temperature and absolute humidity of the atmosphere, into a standard NOx discharge amount Ns, which is an amount of NOx with each rotation speed and each load under standard conditions (for example, 10.71g/kg 25°C), with a correction formula F which is known or a measured formula. Concretely, the actual NOx discharge amount of the engine 20 with optional rotation speed and load under the predetermined temperature and absolute humidity of the atmosphere is measured under each driving condition. Then, the actual NOx discharge amount is converted into the standard NOx discharge amount Ns under the standard conditions with the correction formula F based on temperature and absolute humidity of the atmosphere at the time of the measurement. The map M of the standard NOx discharge amount Ns made as the above is stored. In addition, the correction formula F is stored in the control device 14.

The control device 14 is connected to the solenoid of the pressurized air valve 8 and can control opening and closing of the pressurized air valve 8.

The control device 14 is connected to a driving motor of the urea solution supply pump 9 and can control an operation state of the urea solution supply pump 9. Namely, by controlling the operation state of the urea solution supply pump 9, the control device 14 can change optionally an addition amount Q of the urea solution added to the exhaust gas. The control device 14 is connected to the solenoid of the switching valve 11 and can control opening and closing of the switching valve 11.

The control device 14 is connected to the temperature sensor 12 and can obtain a signal of the temperature T of the atmosphere detected by the temperature sensor 12. The control device 14 is connected to the humidity sensor 13 and can obtain a signal of the absolute humidity H of the atmosphere detected by the humidity sensor 13. A relative humidity can be detected and a detection signal thereof can be transmitted to the control device 14 so as to calculate the absolute humidity with the control device 14 using the temperature T of the atmosphere.

The control device 14 is connected to the ECU 22 and can obtain various kinds of information about the engine 20 obtained by the ECU 22. Concretely, the control device 14 can obtain a rotation speed R of the engine 20, which is detected by a rotation speed sensor 20a of the engine 20, via the ECU 22. The control device 14 can obtain an output of a dynamo 23, driven by the engine 20, detected by a load sensor 23a of the dynamo 23 as a load L of the engine 20 via the ECU 22. The load L is not limited to the detection value of the load sensor 23a and may alternatively be calculated from a rack position, a fuel injection amount or an actual rotation speed. The control device 14 may obtain various kinds of information about the engine 20 directly not via the ECU 22.

The control device 14 is connected to an input device (not shown) and can obtain a signal about a target purification rate inputted from the input device and concentration of the urea solution. Alternatively, information about the target purification rate and the concentration of the urea solution can be inputted and defined previously.

The NOx catalyst 19 promotes deoxidization reaction of NOx. The NOx catalyst 19 is arranged inside the exhaust pipe 21 and at the downstream side of the urea solution injection nozzle 2. The NOx catalyst 19 is configured honeycomb like and promotes reaction that ammonia generated by thermal hydrolysis of the urea solution reduces NOx included in the exhaust gas into nitrogen and water.

Next, an explanation will be given on the urea solution injection nozzle 2 of internal mixing type concretely referring to Fig. 2. The type of the urea solution injection nozzle 2 is not limited to this embodiment and an external mixing type urea solution injection nozzle may alternatively be used. A fluid nozzle used for an air-less type exhaust purification apparatus which does not use pressurized air may alternatively be used.

As shown in Fig. 2, the urea solution injection nozzle 2 has the double pipe 3, the liquid nozzle 4, the air nozzle 5, and the like.

The double pipe 3 is a main component of the urea solution injection nozzle 2 and constitutes the flow path of the urea solution and the flow path of the pressurized air. One of sides of the double pipe 3 is arranged inside the exhaust pipe 21 and the other side (upstream side) thereof is arranged outside the exhaust pipe 21. The downstream end of the double pipe 3 is arranged upstream the NOx catalyst 19 arranged inside the exhaust pipe 21.

The double pipe 3 includes an outer pipe 3b and an inner pipe 3a arranged inside the outer pipe 3b. A urea solution flow path 3c which is a flow path of the urea solution is configured in the inner pipe 3a. A gas flow path 3d which is a flow path of the pressurized air is configured in a space between the inner pipe 3a and the outer pipe 3b. In a middle part of an outer side of the outer pipe 3b, a connection part (not shown) which can be connected watertightly to the exhaust pipe 21 is configured. In downstream ends of the inner pipe 3a and the outer pipe 3b, a female screw part 3e and a male screw part 3f are formed respectively. In an upstream end of the double pipe 3, a urea solution supply port 3g communicated with the urea solution flow path 3c and a gas supply port 3h communicated with the gas flow path 3d are configured.

The liquid nozzle 4 injects the urea solution. The liquid nozzle 4 is formed by a substantially cylindrical member and arranged downstream the double pipe 3. One of ends (downstream end) of the liquid nozzle 4 is formed conically around the axis. At a center of the end, a projection part 4a which is substantially cylindrical is formed so as to be projected axially. In the other end (upstream end) of the liquid nozzle 4, a male screw part 4b is formed so as to be projected axially. Furthermore, in an axial center part of the liquid nozzle 4, a urea solution flow path 4c is formed so as to penetrate axially the whole liquid nozzle 4 from the male screw part 4b to the projection part 4a. A middle part of the urea solution flow path 4c is contracted diametrically so that an inner diameter of a downstream end of the urea solution flow path 4c is formed smaller than an inner diameter of an upstream end of the urea solution flow path 4c.

The male screw part 4b of the liquid nozzle 4 is screwed to the female screw part 3e of the double pipe 3. Accordingly, the double pipe 3 is connected to the liquid nozzle 4 and the urea solution flow path 4c is communicated with the urea solution flow path 3c of the double pipe 3. Then, the urea solution can be supplied from the urea solution flow path 3c of the double pipe 3 to the urea solution flow path 4c.

The air nozzle 5 injects the urea solution which is atomized. The air nozzle 5 is formed by a substantially cylindrical member. The air nozzle 5 is arranged downstream the liquid nozzle 4 so that one of ends (upstream end) of the air nozzle 5 touches the downstream end of the double pipe 3. A flange part 5a is firmed in a side surface of an upstream end of the air nozzle 5. In an axial part of the air nozzle 5, a hole which has a substantially conical diametrical contracted part contracted diametrically from a middle part toward the other side (downstream side) is formed penetratingly from the upstream end to the downstream end. An inner diameter of an upstream end of the hole is formed enough for the pressurized air to pass therethrough even if a downstream end of the liquid nozzle 4 is inserted into the upstream end of the hole. In an axial center part of a diametrical contracted side end of the diametrical contracted part, a mixing flow path 5c of the urea solution is formed. In a downstream end of the air nozzle 5, an injection port 5e which is an opening of the mixing flow path 5c is formed.

The air nozzle 5 is connected to the double pipe 3 by a nut 5b. The downstream end of the liquid nozzle 4 is inserted into the hole of the upstream side of the air nozzle 5 (the mixing flow path 5c). At this time, a space is formed between the hole of the air nozzle 5 and the liquid nozzle 4. The space is communicated as a gas flow path 5d with the gas flow path 3d of the double pipe 3 and the mixing flow path 5c. Accordingly, the urea solution is supplied from the urea solution flow path 4c of the liquid nozzle 4 to the mixing flow path 5c, and the pressurized air is supplied from the gas flow path 5d to the mixing flow path 5c. Namely, the injection port 5e can inject the urea solution by screwing the air nozzle 5 to the double pipe 3.

According to the above, the urea solution injection nozzle 2 has the liquid nozzle 4 which injects the urea solution toward one of the sides (downstream side) and the air nozzle 5, and injects the urea solution toward the NOx catalyst 19. In this embodiment, in the urea solution injection nozzle 2, the urea solution flow path 4c, the gas flow path 5d, and the mixing flow path 5c are configured by the liquid nozzle 4 and the air nozzle 5. However, the configuration is not limited thereto and the urea solution flow path 4c, the gas flow path 5d, and the mixing flow path 5c may be configured respectively.

An explanation will be given on an operation mode of the pressurized air valve 8 and the switching valve 11 referring to Fig. 1.

As shown in Fig. 1, the air tank 7 is connected to the gas supply port 3h of the urea solution injection nozzle 2 via the pressurized air valve 8 by the second supply flow path 16.

As mentioned above, normally, the pressurized air valve 8 is held at the position V. In this case, since the second supply flow path 16 is closed, the pressurized air is not supplied to the gas supply port 3h of the urea solution injection nozzle 2.

When the control device 14 energizes the solenoid of the pressurized air valve 8, the pressurized air valve 8 is switched from the position V to the position W. In this case, since the second supply flow path 16 is opened, the pressurized air is supplied to the gas supply port 3h of the urea solution injection nozzle 2.

When the control device 14 stops the energization to the solenoid of the pressurized air valve 8, the pressurized air valve 8 is switched to the position V. In this case, since the second supply flow path 16 is closed, the pressurized air is not supplied to the gas supply port 3h of the urea solution injection nozzle 2.

As shown in Fig. 1, the urea solution tank 10 is connected to the urea solution supply port 3g of the urea solution injection nozzle 2 via the urea solution supply pump 9 and the switching valve 11 by the first supply flow path 15.

As mentioned above, normally, the switching valve 11 is held at the position X. In this case, since the first supply flow path 15 is closed, the urea solution is not supplied to the urea solution supply port 3g of the urea solution injection nozzle 2. The urea solution supply port 3g of the urea solution injection nozzle 2 is atmosphere-opened in the drain pot 17 via the flow path 15a.

When the control device 14 energizes the solenoid of the switching valve 11, the switching valve 11 is switched to the position Y. In this case, since the first supply flow path 15 is opened, the urea solution is supplied to the urea solution supply port 3g of the urea solution injection nozzle 2. Since the communication with the drain pot 17 is cut off, the urea solution supply port 3g of the urea solution injection nozzle 2 is not atmosphere-opened.

When the control device 14 stops the energization to the solenoid of the switching valve 11, the switching valve 11 is switched to the position X. In this case, since the first supply flow path 15 is closed, the urea solution is not supplied to the urea solution supply port 3g of the urea solution injection nozzle 2. Since the communication with the drain pot 17 is permitted, the urea solution supply port 3g of the urea solution injection nozzle 2 is atmosphere-opened in the drain pot 17.

An explanation will be given on an operation mode of the urea solution injection nozzle 2 referring to Figs. 1 and 2.

As shown in Fig. 1, when the supply (injection) of the urea solution to the inside of the exhaust pipe 21 is started, the control device 14 switches the switching valve 11 to the position Y so that the urea solution is supplied to the urea solution supply port 3g of the urea solution injection nozzle 2 (the double pipe 3). The urea solution is injected from the projection part 4a of the liquid nozzle 4 to the mixing flow path 5c of the air nozzle 5 via the urea solution flow path 3c of the double pipe 3 and the urea solution flow path 4c of the liquid nozzle 4.

In this state, the control device 14 switches the pressurized air valve 8 to the position W so that the pressurized air is supplied to the gas supply port 3h of the urea solution injection nozzle 2 (the double pipe 3). As shown in Fig. 2, the pressurized air is injected at a predetermined pressure via the gas flow path 3d of the double pipe 3 and the gas flow path 5d of the air nozzle 5 to the mixing flow path 5c of the air nozzle 5. As a result, the urea solution collides with the pressurized air inside the mixing flow path 5c of the air nozzle 5 and is atomized, and then injected via the injection port 5e of the air nozzle 5.

As shown in Fig. 1, when the supply (injection) of the urea solution to the inside of the exhaust pipe 21 is stopped, the control device 14 switches the switching valve 11 to the position X so that the supply of the urea solution to the urea solution supply port 3g of the urea solution injection nozzle 2 (the double pipe 3) is stopped. Accordingly, the urea solution supply port 3g of the double pipe 3 is atmosphere-opened via the first supply flow path 15 and the switching valve 11.

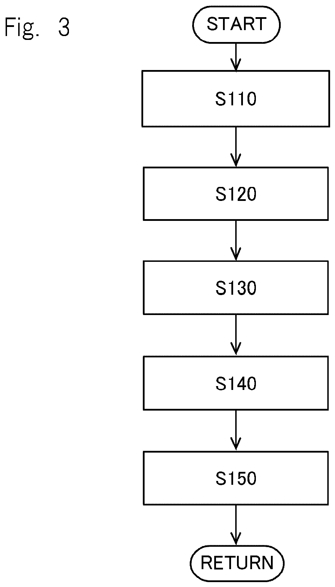

An explanation will be given on a mode of calculation of the addition amount of the urea solution referring to Fig. 3.

The control device 14 obtains the signal of the temperature T of the atmosphere from the temperature sensor 12 and obtains the signal of the absolute humidity H of the atmosphere from the humidity sensor 13. The control device 14 obtains the signal of the rotation speed R of the engine 20 from the rotation speed sensor 20a and obtains the signal of the load L of the engine 20 from the load sensor 23a. The control device 14 calculates an actual NOx discharge amount Nr based on the obtained information and controls the operation state of the urea solution supply pump 9 (see Fig. 1).

As shown in Fig. 3, the control device 14 controls the operation state of the urea solution supply pump 9 with below steps.

Firstly, at a step S110, the control device 14 obtains the signal of the temperature T of the atmosphere from the temperature sensor 12 and obtains the signal of the absolute humidity H of the atmosphere from the humidity sensor 13. The control device 14 obtains the signal of the rotation speed R of the engine 20 from the rotation speed sensor 20a and obtains the signal of the load L of the engine 20 from the load sensor 23a.

At a step S120, the control device 14 calculates the standard NOx discharge amount Ns, which is an amount of NOx discharged from the engine 20 driven with the rotation speed R and the signal of the load L under standard conditions, from the signal of the rotation speed R and the signal of the load L of the engine 20 with the map M.

At a step S130, the control device 14 calculates an actual NOx discharge amount Nr, which is an amount of NOx discharged from the engine 20 driven with the rotation speed R and the signal of the load L under the temperature T and the absolute humidity H of the atmosphere, from the standard NOx discharge amount Ns corresponding to the rotation speed R and the signal of the load L calculated at the step S120 and the signal of the temperature T and the signal of the absolute humidity H of the atmosphere with the correction formula F by inverse operation. Namely, the actual NOx discharge amount Nr which is necessary to set the amount of NOx discharged from the engine 20, which is driven with the rotation speed R and the signal of the load L under the temperature T and the absolute humidity H of the atmosphere, to the standard NOx discharge amount Ns is calculated with the correction formula F.

At a step S140, the control device 14 determines the addition amount Q of the urea solution, which is necessary to reduce the actual NOx discharge amount Nr from the target purification rate and the concentration of the urea solution which are set optionally.

At a step S150, the control device 14 controls the operation state of the urea solution supply pump 9 so as to supply the addition amount Q of the urea solution in the urea solution supply pump 9 to the exhaust gas. Subsequently, the control device 14 returns to the step S110.

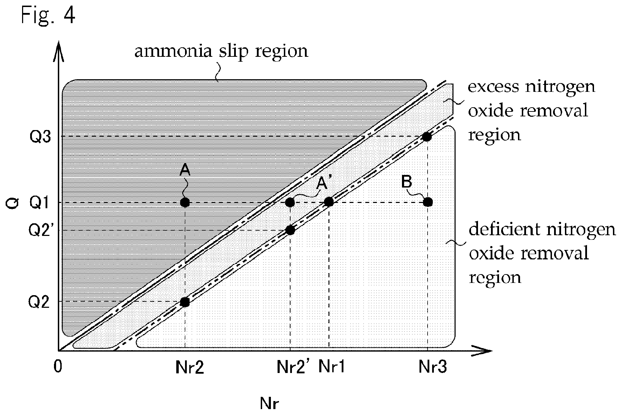

Accordingly, as shown in Fig. 4, in the case in which the addition amount Q of the urea solution is Q1 while the actual NOx discharge amount Nr is Nr1, when the actual NOx discharge amount Nr is decreased to Nr2', NOx is decreased more than the target purification rate (a two-dot chain line in Fig. 4) (over-denitration) (see A'). Then, by the above control, the decrease of the actual NOx discharge amount Nr to Nr2' is calculated, and the urea solution supply pump 9 is controlled so as to set the addition amount Q of the urea solution to a suitable addition amount Q2'. Furthermore, when the actual NOx discharge amount Nr is decreased to Nr2, NOx is decreased more than the target purification rate (over-denitration) and ammonia exceeding a theoretical equivalent (a dashed line in Fig. 4) and remaining is discharged outside the exhaust pipe 21 (ammonia slip). Then, by the above control, the decrease of the actual NOx discharge amount Nr to Nr2 is calculated, and the urea solution supply pump 9 is controlled so as to set the addition amount Q of the urea solution to a suitable addition amount Q2. When the actual NOx discharge amount Nr is increased to Nr3, denitration shortage that NOx cannot be decreased to the target purification rate occurs (see a point B). Then, by the above control, the increase of the actual NOx discharge amount Nr to Nr3 is calculated, and the urea solution supply pump 9 is controlled so as to set the addition amount Q of the urea solution to a suitable addition amount Q3.

As the above, the exhaust purification apparatus 1, in which ammonia is added as a reducing agent to the exhaust gas of the engine 20 which is an internal combustion engine so as to reduce nitrogen oxide in the exhaust gas, has the temperature sensor 12 detecting a temperature T of the atmosphere, the humidity sensor 13 detecting the absolute humidity H or the relative humidity of the atmosphere, and the control device 14 calculating the addition amount of the urea solution. The map M, which converts the actual NOx discharge amount Nr of the engine 20 driven with each rotation speed and each load under predetermined temperature and absolute humidity of the atmosphere into the standard NOx discharge amount Ns of the engine 20 with each rotation speed and each load under the standard conditions with the correction formula F is stored in the control device 14. The rotation speed sensor 20a which is a rotation speed detection means detecting the rotation speed of the engine 20 and the load sensor 23a of the dynamo 23 which is a load detection means detecting the load of the engine 20 are connected to the control device 14. The standard NOx discharge amount Ns corresponding to the rotation speed R detected by the rotation speed sensor 20a and the load L detected by the load sensor 23a is calculated with the map M. The standard NOx discharge amount Ns is converted into the actual NOx discharge amount Nr of the rotation speed R and the load L under the temperature T of the atmosphere detected by the temperature sensor 12 and the absolute humidity H of the atmosphere detected by the humidity sensor 13 with the correction formula F by inverse operation. The addition amount Q of the urea solution is calculated based on the actual NOx discharge amount Nr.

According to the configuration, the actual NOx discharge amount Nr based on the characteristic of the engine 20 can be calculated while considering the temperature T of the atmosphere and the absolute humidity H of the atmosphere which influence the NOx discharge amount greatly. Accordingly, the urea solution of the suitable amount can be added without measuring directly the actual NOx discharge amount Nr with a NOx sensor.

The addition amount Q is calculated in consideration of the target purification rate and the concentration of the urea solution.

According to the configuration, the addition amount Q can be adjusted corresponding to the operating condition. Accordingly, the urea solution of the suitable amount can be added without measuring directly the actual NOx discharge amount Nr with a NOx sensor.

### Industrial Applicability

The present invention can be used especially for an exhaust purification apparatus for a ship.

### Description of Notations

- 1: exhaust purification apparatus
- 12: temperature sensor
- 13: humidity sensor
- 14: control device
- 20: engine
- 20a: rotation speed sensor
- 23a: load sensor
- R: rotation speed
- W: load
- Ns: standard NOx discharge amount
- Nr: actual NOx discharge amount
- Q: addition amount

## Claims

1. An urea solution injection device of an exhaust purification device (1) in which an urea solution is added as a reducing agent to exhaust gas of an internal combustion engine (20) so as to reduce nitrogen oxide in the exhaust gas, comprising:
a temperature sensor (12) adapted to detect a temperature of atmosphere;
a humidity sensor (13) adapted to detect an absolute humidity or a relative humidity of the atmosphere; and
a control device (14) adapted to calculate an addition amount of the urea solution,
**characterized in that** the control device further comprises a map, which is adapted to convert an actual NOx discharge amount (Nr) of the internal combustion engine (20) driven with each rotation speed and each load (W) under predetermined temperature and absolute humidity of the atmosphere into the standard NOx discharge amount (Ns) of the internal combustion engine (20) with each rotation speed and each load (W) under standard conditions with a correction formula is stored in the control device,
a rotation speed detection means (20a) adapted to detect the rotation speed (R) of the internal combustion engine (20) and a load detection means (23a) adapted to detect the load (W) of the internal combustion engine (20) are connected to the control device (14), and wherein
the control device is adapted such that the standard NOx discharge amount (Ns) corresponding to the rotation speed (R) detected by the rotation speed detection means (20a) and the load (W) detected by the load detection means (23a) is calculated with the map, the standard NOx discharge amount (Ns) is converted into the actual NOx discharge amount (Nr) of the rotation speed (R) and the load (W) under the temperature of the atmosphere detected by the temperature sensor (12) and the absolute humidity of the atmosphere detected by the humidity sensor (13) with the correction formula by inverse operation, and the addition amount (Q) of the urea solution is calculated based on the actual NOx discharge amount (Nr).

2. The urea solution injection device according to claim 1, wherein the control device (14) is adapted to calculate the addition amount (Q) in consideration of a target purification rate and a concentration of the urea solution.

## Patentansprüche

1. Vorrichtung zur Injektion von Harnstofflösungen einer Abgasreinigungsvorrichtung (1), in der eine Harnstofflösung einem Abgas eines Verbrennungsmotors (20) als Reduktionsmittel zugesetzt wird, um Stickoxide im Abgas zu reduzieren, umfassend:
eine Temperatursonde (12), die angepasst ist zur Erfassung einer Temperatur einer Atmosphäre,
eine Feuchtigkeitssonde (13), die angepasst ist zur Erfassung einer absoluten Feuchtigkeit oder einer relativen Feuchtigkeit der Atmosphäre, und
eine Steuervorrichtung (14), die angepasst ist zur Berechnung einer zuzusetzenden Menge der Harnstofflösung,
**dadurch gekennzeichnet, dass**
die Steuervorrichtung darüber hinaus eine Karte umfasst, die angepasst ist zur Umwandlung einer tatsächlichen NOx-Emissionsmenge (Nr) bei vorgegebener Temperatur und absoluter Feuchtigkeit der Atmosphäre in die Standard NOx-Emissionsmenge (Ns) des Verbrennungsmotors (20) bei jeder Drehgeschwindigkeit und jeder Belastung (W) unter Standardbedingungen, wobei in der Steuervorrichtung eine Korrekturformel hinterlegt ist,
ein Drehgeschwindigkeit-Erfassungsmittel (20a), das angepasst ist zur Erfassung der Drehgeschwindigkeit (R) des Verbrennungsmotors (20), und ein Last-Erfassungsmittel (23a), das angepasst ist zur Erfassung der Last (W) des Verbrennungsmotors (20), mit der Steuervorrichtung (14) verbunden sind, und wobei die Steuervorrichtung entsprechend angepasst ist, so dass
die Standard-NOx-Emissionsmenge (Ns) für die mit dem Drehgeschwindigkeit-Erfassungsmittel (20a) erfasste Drehgeschwindigkeit (R) und die mit dem Last-Erfassungsmittel (23a) erfasste Last (W) mit Hilfe der Karte berechnet wird, die Standard-NOx-Emissionsmenge (Ns) mit Hilfe der Korrekturformel durch umgekehrten Betrieb in die tatsächliche NOx-Emissionsmenge (Nr) bei der Drehgeschwindigkeit (R) und der Last (W) bei der mit der Temperatursonde (12) erfassten Temperatur der Atmosphäre und der mit der Feuchtigkeitssonde (13) erfassten absoluten Feuchtigkeit der Atmosphäre umgewandelt wird, und die Zugabemenge (Q) der Harnstofflösung auf Grundlage der tatsächlichen NOx-Emissionsmenge (Nr) berechnet wird.

2. Vorrichtung zur Injektion von Harnstofflösungen nach Anspruch 1, wobei die Steuervorrichtung (14) so angepasst ist, dass die Zugabemenge (Q) im Hinblick auf eine Ziel-Reinigungsrate und eine Konzentration der Harnstofflösung berechnet wird.

## Revendications

1. Dispositif d'injection de solution d'urée d'un dispositif de purification d'échappement (1) dans lequel une solution d'urée est ajoutée comme agent réducteur à du gaz d'échappement d'un moteur à combustion interne (20) de manière à réduire l'oxyde d'azote dans le gaz d'échappement, comprenant :
un capteur de température (12) adapté à détecter une température atmosphérique ;
un capteur d'humidité (13) adapté à détecter une humidité absolue ou une humidité relative de l'atmosphère ; et
un dispositif de commande (14) adapté à calculer une quantité d'addition de la solution d'urée,
**caractérisé en ce que**
le dispositif de commande comprend en outre un diagramme qui est adapté à convertir une quantité d'évacuation de NOx réelle (Nr) du moteur à combustion interne (20) entraînée avec chaque vitesse de rotation et chaque charge (W) dans des conditions de température et d'humidité absolue de l'atmosphère prédéterminées en la quantité d'évacuation de NOx standard (Ns) du moteur à combustion interne (20) avec chaque vitesse de rotation et chaque charge (W) dans des conditions standard avec une formule de correction est stockée dans le dispositif de commande, un moyen de détection de vitesse de rotation (20a) adapté à détecter la vitesse de rotation (R) du moteur à combustion interne (20) et un moyen de détection de charge (23a) adapté à détecter la charge (W) du moteur à combustion interne (20) sont connectés au dispositif de commande (14), et dans lequel
le dispositif de commande est adapté de sorte que la quantité d'évacuation de NOx standard (Ns) correspondant à la vitesse de rotation (R) détectée par le moyen de détection de vitesse de rotation (20a) et la charge (W) détectée par le moyen de détection de charge (23a) est calculée avec le diagramme, la quantité d'évacuation de NOx standard (Ns) est convertie en la quantité d'évacuation de NOx réelle (Nr) de la vitesse de rotation (R) et la charge (W) dans les conditions de température atmosphérique détectée par le capteur de température (12) et d'humidité absolue de l'atmosphère détectée par le capteur d'humidité (13) avec la formule de correction par l'opération inverse, et la quantité d'addition (Q) de la solution d'urée est calculée en fonction de la quantité d'évacuation de NOx réelle (Nr).

2. Dispositif d'injection de solution d'urée selon la revendication 1, dans lequel le dispositif de commande (14) est adapté à calculer la quantité d'addition (Q) compte tenu d'un taux de purification cible et d'une concentration de la solution d'urée.
